# EUROPEAN PATENT APPLICATION

(11) **EP 0 801 386 A2**
(43) Date of publication of application: **15.10.1997**
(21) Application number: 97302497.9
(22) Date of filing: 11.04.1997
(51) Int. Cl.: G11B 20/10, H04B 14/04

(54) **Recording and reproducing apparatus for 1-bit digital signal**

(30) Priority: 12.04.1996 JP 91603/96
(71) Applicant: SONY CORPORATION, Tokyo (JP)
(72) Inventor: Nishio, Ayataka, Shinagawa-ku, Tokyo (JP)
(74) Representative: Nicholls, Michael John

(57) **Abstract**

A signal processing apparatus for processing 1-bit digital signals obtained on 1-bit sigma-delta conversion. The apparatus sums an analog signal having a first range and a sub-data signal having a pre-set frequency included in a second band sufficiently separated from the first band and by modulating the resulting signal by ΣΔ modulation and converts the resulting sum signal into a 1-bit digital signal which is then recorded on a recording medium. It is possible in this manner to reproduce the sub-data information, such as the letter information, video information or sub-audio information pertinent to the main information, simultaneously with and in isolation from the main information.

## Description

This invention relates to a signal processing apparatus for processing 1-bit digital signals obtained by 1-bit sigma-delta conversion, an apparatus for recording the signals and an apparatus for reproducing the signals.

A method for recording, reproducing or transmitting digital signals previously converted from analog signals heretofore has been carried out by a recording and/or reproducing apparatus having an optical disc, typified by a compact disc (CD), or a magnetic tape, typified by a digital audio tape (DAT), as a recording medium, or has been used in digital broadcasting, such as satellite broadcasting. In such a conventional digital audio transmission apparatus, a sampling frequency of 48 kHz or 44.1 kHz or a number of quantization bits of 16 or 20 have been prescribed as the format in converting digital signals.

In a conventional digital audio format, the analog audio signals were sampled and quantized using a sampling frequency equal to twice the band required for transmission in accordance with the Shannon's sampling theorem. Thus, for recording sub-data information, such as sub-audio signals, video signals or letter information, it is necessary to provide a separate recording area or to use a portion of the recording area for the main audio data. If the sub-data information is recorded in an area distinct from the main audio data area, not only is the simultaneous recording rendered difficult, but also the recordable data capacity is lowered.

In one aspect, the present invention provides a reproducing apparatus for reproducing a recording medium having recorded thereon, as a ΣΔ modulated 1-bit digital signal, a main signal having a first range and a sub-data signal having a pre-set frequency included in a second band sufficiently separated from said first band. The reproducing apparatus includes reproducing means for reproducing 1-bit digital signals from said recording medium, output means for outputting the 1-bit digital signal reproduced by the reproducing means, first extraction means for extracting the main signal having the first range from the 1-bit digital signals reproduced by the reproducing means, second extraction means for extracting the sub-data signal included in the second range from the 1-bit digital signals reproduced by the reproducing means and output means for outputting the main signal extracted by the first extraction means and the sub-data signal extracted by the second extraction means.

In another aspect, the present invention provides a recording apparatus for recording, as a ΣΔ modulated 1-bit digital signal, a main signal having a first range and a sub-data signal having a pre-set frequency included in a second band sufficiently separated from the first band, on a recording medium. The recording apparatus includes addition means for summing the main signal and the sub-data signal to each other, ΣΔ modulation means for converting the result of addition by the addition means into a 1-bit digital signal and recording means for recording the 1-bit digital signal, as converted by the ΣΔ modulation means, on the recording medium.

In still another aspect, the present invention provides a transmission apparatus including addition means for summing a main signal having a first range and a sub-data signal having a pre-set frequency included in a second band sufficiently separated from the first band, ΣΔ modulation means for converting the result of addition by the addition means into a 1-bit digital signal and transmission means for transmitting the 1-bit digital signal, as converted by the ΣΔ modulation means.

In yet another aspect, the present invention provides a recording medium having recorded thereon a 1-bit digital signal obtained by superimposing a main signal having a first band on a sub-data signal having a pre-set frequency included in a second band sufficiently separated from the first band and by modulating the resulting signal by ΣΔ modulation.

Embodiments of the present invention can provide a signal processing apparatus, a signal recording apparatus or a signal reproducing apparatus whereby the sub-data information, other than the main audio signals, such as the sub-audio signals, video signals or the letter information, can be processed, recorded or reproduced without the necessity of increasing the recording or transmission capacity.

Preferably the sub-data signal is not copy protection information.

In the signal processing apparatus of the present invention, in which a sum output of the main signal having the first range and the sub-signal having the second range sufficiently separated from the first range is converted by ΣΔ modulation means and a 1-bit digital signal as the conversion output is recording-processed by recording means for recording on a recording medium, the sub-data information, such as audio or video signals or the letter information, other than the main audio signals, can be recorded without the necessity of increasing the recording capacity. In addition, in the reproducing apparatus according to the present invention, in which the main signal and the sub-signal are extracted by the first extraction means and second extraction means, respectively, from the 1-bit digital signal reproduced by the reproducing means, and the sub-signals extracted by the second extraction means are decoded by decoding means, the audio or video signals or the letter information, recorded on the recording medium, can be taken out without the necessity of increasing the recording capacity.

Preferred embodiments of the present invention will now be explained in detail with reference to the accompanying drawings, in which:-

Fig.1 shows a recording apparatus for recording sub-data signals in superimposition on main signals on a recording medium according to a first embodiment of the present invention.

Fig.2 is a block diagram showing a ΣΔ modulator.

Fig.3 shows the frequency response of the 1-bit audio digital signals modulated by the ΣΔ modulator and noise components.

Fig.4 shows the spectrum of sub-data signals according to the present invention.

Fig.5 shows the frequency response of the 1-bit audio digital signals modulated by the ΣΔ modulator, sub-data signals and noise components.

Fig.6 shows a reproducing apparatus for reproducing main signals and sub-data signal recorded on a recording medium by a recording apparatus of the first embodiment of the present invention.

Fig.7 is a block diagram of an analog FOR filter adapted to the reproducing apparatus shown in Fig.6.

Fig.8 shows a recording apparatus for recording sub-data signals in superimposition on main signals on a recording medium according to a second embodiment of the present invention.

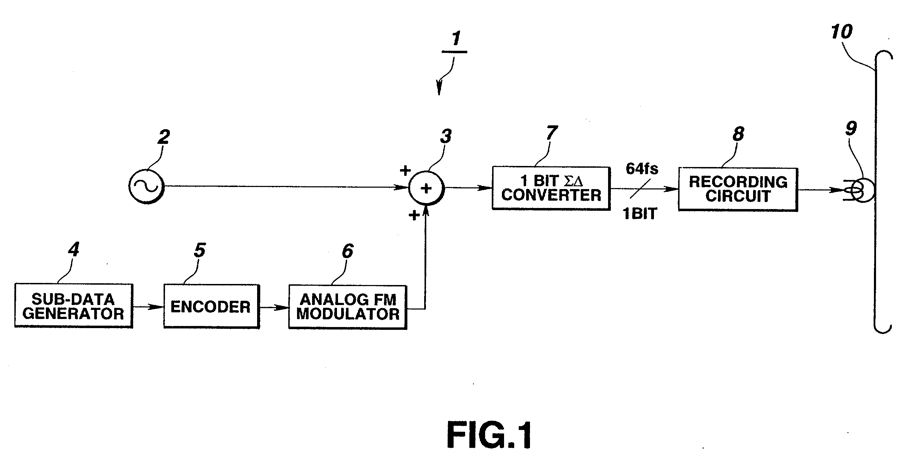

Fig.1 shows a first embodiment of the present invention which is directed to an audio data recording device 1 for converting analog audio signals by sigma-delta (ΣΔ) conversion into 1-bit digital audio signals for recording the resulting 1-bit digital audio signals on a magnetic tape.

The audio data recording device 1 has an adder 3 for adding an analog audio signal of an audio range outputted by a sound source 2 and an analog FM modulated signal with the carrier frequency centered about, for example,
16 fs (fs = 44.1 kHz) sufficiently separated from the audio range, a 1-bit ΣΔ converter 7 for converting the sum output of the adder 3 into 1-bit digital data and a recording processing circuit 8 for performing recording processing on the 1-bit digital data outputted by the 1-bit ΣΔ converter 7.

Usually, the 1-bit ΣΔ converter 7 samples the analog audio signals using a sampling frequency sufficiently higher than the frequency range of the analog audio signals (audio frequency range) and quantizes the resulting samples. The analog audio signals are sampled using the sampling frequency 64 times the current sampling frequency fs (= 44.1 kHz) for the CD, or 64 fs.

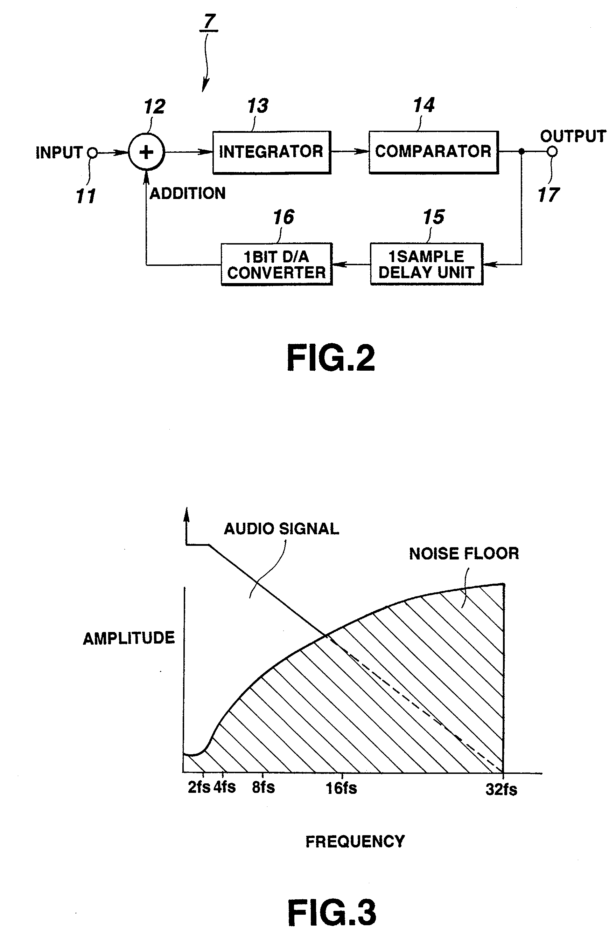

This 1-bit ΣΔ converter 7 is configured as shown in Fig. 2 wherein an analog input signal entering an input terminal 11 is supplied via an adder 12 to an integrator 13. An integrated output of the integrator 13 is supplied to a comparator 14 where it is compared to a neutral point voltage of the input signal and processed with 1-bit quantization every sampling period so as to be outputted as 1-bit digital audio data.

The 1-bit digital audio data, as the quantized data, is supplied to a 1-sample delay unit 15 where it is delayed one sampling period. These delayed data are converted by a 1-bit D/A converter 16 into analog signals which are fed to an adder 12 so as to be summed to the input signal from the input terminal 11.

Fig.3 shows the frequency response of digital audio data outputted by the 1-bit ΣΔ converter 7. These digital audio data are shown as audio signals. By the ΣΔ processing by the 1-bit ΣΔ converter 7, the noise components, shown as a noise floor, can be driven to a band higher than the audio range. In the case of the 1-bit digital audio data outputted by the 1-bit ΣΔ modulator 7, there is left a broad unused band from the vicinity of the frequency of 16fs up to the Nyquist frequency 32 fs, granting that the dynamic range is not so broad, even although the passband up to 100 kHz is secured and a filter having moderate attenuation characteristics up to the Nyquist frequency of 32 fs is used for prohibiting aliasing, as shown in Fig.3. This unused range is usually removed by an analog low-pass filter when the data is reproduced after conversion into analog signals by a D/A converter provided on the recording/reproducing apparatus.

The digital audio data recording device 1 of the first embodiment superimposes or adds FM modulated signals, obtained on analog FM modulation of sub-signals, such as audio signals, vide signals or the letter information different from main 1-bit digital audio data, in a frequency band from the vicinity of 16 fs to the Nyquist frequency of 32 fs, which is a frequency band not affecting the 1-bit digital data. The digital audio data recording device 1 then ΣΔ converts the sum output by the 1-bit ΣΔ modulator 7. The 1-bit digital data from the 1-bit ΣΔ modulator 7 is recording-processed by the recording processing circuit 8 and thence supplied via a recording head 9 to a magnetic tape 10 so as to be recorded as 1-bit digital data thereon.

The sub-signals of the FM modulated signals, such as the audio signals, video signals or the letter information, generated by the sub-data generator 4, are encoded by an encoder 5 and subsequently FM modulated by the analog FM modulator 6. The FM modulator 6 FM-modulates the encoded output of the encoder 5 with a frequency equal to 16 times the sampling frequency of the current compact disc (CD) (fs = 44.1 kHz) or 16 44.1 kHz) as the center frequency (carrier frequency).

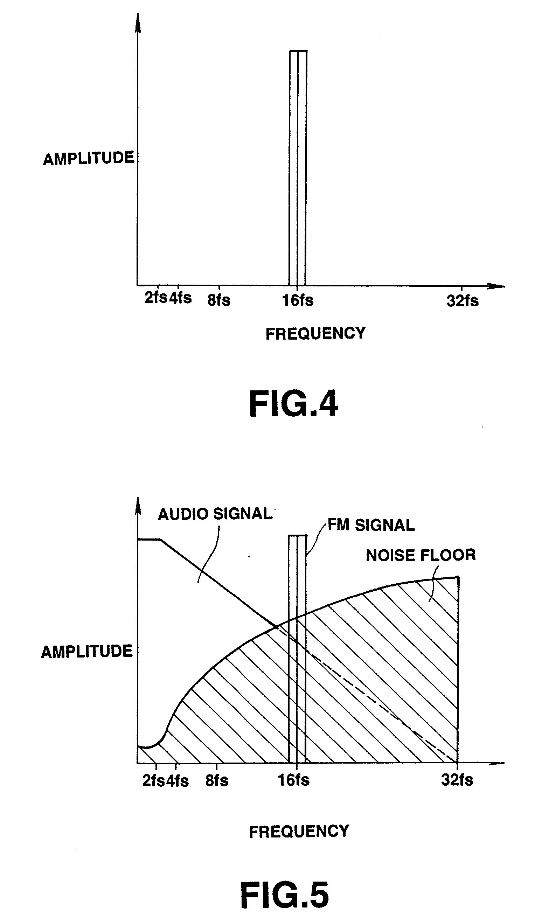

The spectrum of the FM modulated signals is as shown in Fig.4, where it is depicted 'FM signal'. Therefore, the spectrum of the 1-bit digital audio data, on which is superimposed the FM modulated signal, is as shown in Fig.5. As may be seen from Fig.5, the FM modulated signals are included in a band higher than the band of the 1-bit digital audio data (depicted as 'audio signal') masked by the noise floor, and which is removed by an analog low-pass filter at the time of reproduction.

Thus, with the present audio data recording device 1, the sub-signals, such as audio signals, video signals or the letter information, can be recorded on the magnetic tape 10 without the necessity of increasing the recording capacity. For example, if sub-signals are the surround speech, not requiring the high sound quality such as is required for the main audio data, surround reproduction becomes possible on the reproducing side without increasing the capacity of the magnetic tape 10. On the other hand, if the sub-signals are video signals, such as still image signals, the still images can be reproduced on the reproducing side having the image reproducing function without excessively increasing the capacity of the magnetic tape 10.

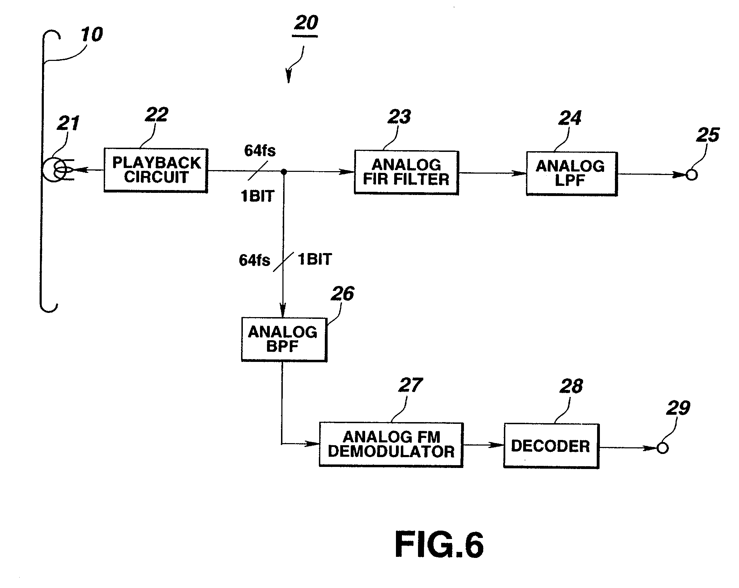

A second embodiment of the present invention, directed to an audio data reproducing device 20 for reproducing the 1-bit digital data recorded by, for example, the audio data reproducing device 1 on the magnetic tape 10, is now explained with reference to Fig.6.

This audio data reproducing device 20 includes a playback processing circuit 22 for playback processing the 1-bit digital data read out from a playback head 21, and a 4-tap analog FIR filter 23 for D/A converting the 1-bit digital data from the playback processing circuit 22 while sufficiently attenuating the center frequency of analog FM modulation of 16fs and the vicinity. The audio data reproducing device 20 includes an analog low-pass filter 24 having a filter output of an analog finite impulse response (FIR) filter 23 as analog audio signal, and an analog band-pass filter (BPS) 26 for demodulating analog FM modulated signals. The audio data reproducing device 20 further includes an analog FM demodulator 27 for analog FM-modulating the analog FM modulated signal and a decoder 28 for decoding the demodulated output of the analog FM demodulator 27.

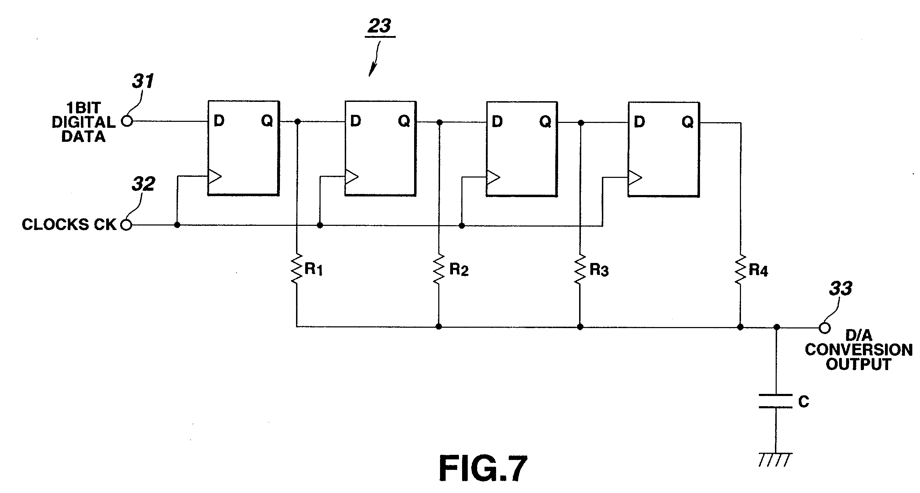

The analog FIR filter 23 includes four D-flipflops f1, f2, f3 and f4 connected in cascade and four resistors R1, R2, R3 and R4 connected to these D-flipflops f1, f2, f3 and f4, respectively, as shown in Fig.7. The currents from these four resistors R1, R2, R3 and R4 are summed together to form an analog FIR filter. An output of the FIR filter is smoothed by a capacitor C so as to be outputted at an output terminal 33.

An input terminal 31, fed with 10 bit digital data, is connected to a data input terminal D of the D-flipflop f2, an output terminal Q of which is connected to a data input terminal D of the D-flipflop f2. An output of the D-flipflop f2 is connected to a data input terminal D of the D-flipflop f3, an output terminal Q of which is connected to a data input terminal D of the D-flipflop f4.

A clock input terminal 32, fed with clocks CK, is connected to each of clock terminals of the D-flipflops f1, f2, f3 and f4.

The resistor R1 has its one end connected to the D-flipflop f1, while the resistor R2 has its one end connected to the output terminal Q of the D-flipflop f2. Similarly, the resistor R3 has its one end connected to the D-flipflop f3, while the resistor R4 has its one end connected to the output terminal Q of the D-flipflop f4.

The resistors R1 to R4 have their opposite ends connected together to form an output terminal 33 at a junction point. The above analog output is smoothed using the capacitor C connected across the junction point and the ground.

Since the output of the analog FIR filter 23 is smoothed to produce the analog output, the auxiliary signal, which is the above-described FM modulated signal, is outputted at the output terminal 25.

The analog signal from the analog FIR filter 23 is converted by the analog LPF 24 into analog audio signals which are outputted at the output terminal 25.

The analog BPF 26 has a pre-set passband centered about the center frequency 16fs of the analog BPF 26 and demodulates the 1-bit digital data into analog FM modulated signal.

This analog FM modulated signal is demodulated by the analog FM demodulator 27 and the decoder 28 into auxiliary signals, such as audio or video signals or letter information.

Therefore, this audio data reproducing device 20 can take out sub-signals, such as audio or video signals or letter information, recorded on the magnetic tape 10, while making it unnecessary to increase the recording capacity. If the sub-signal is the surround sound, surround reproduction becomes possible.

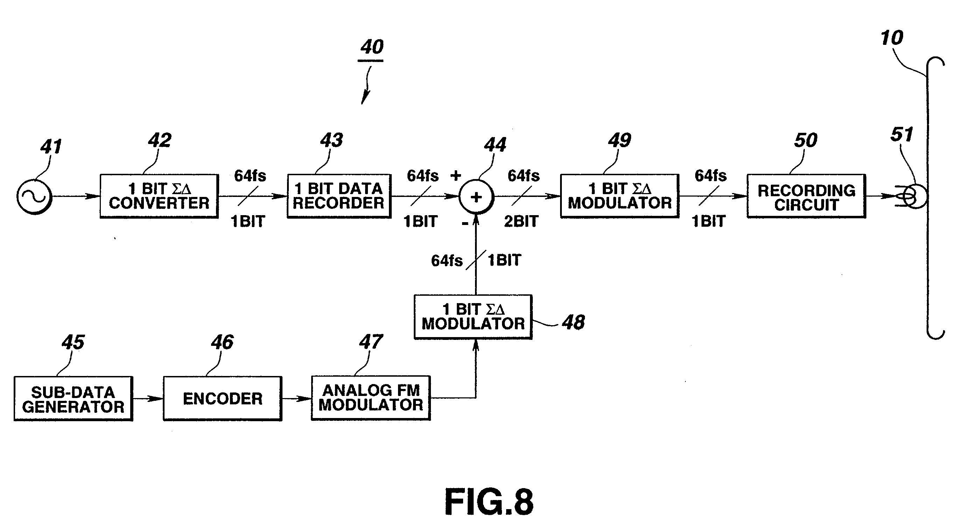

A third embodiment, directed to an audio data recording device 40 for converting analog audio signals by ΣΔ modulation into 1-bit digital audio data for recording on the magnetic tape 10, as shown in Fig.8, is now explained.

The present audio data recording device 40 differs from the audio data recording device 1 of the first embodiment in that, while the audio data recording device 1 sums the FM modulated sub-signals to the analog audio signals and the resulting sum signal is converted by 1-bit ΣΔ modulation, the audio data recording device 40 converts the analog audio signals and the FM modulated signals by 1-bit ΣΔ modulation and sums the 1-bit ΣΔ modulated signals to give a sum signal which is further modulated by 1-bit ΣΔ modulation.

The present audio data recording device 40 includes a 1-bit ΣΔ modulator 42 for converting the analog signals from a sound source 41 into 1-bit digital audio data and a 1-bit data recorder 43 for temporarily recording the 1-bit digital audio data from the 1-bit ΣΔ modulator 42. The audio data recording device 40 also includes a sub-data generator 45 for generating audio signals, video signals or the letter information different from the main analog audio signals and an encoder 46 for encoding the sub-data. The audio data recording device 40 also includes an analog FM modulator 47 for FM modulating an encoded output from the encoder 46 and a 1-bit ΣΔ modulator 48 for ΣΔ modulation of the analog FM modulated signal. The audio data recording device 40 also includes a digital adder 44 for summing the 1-bit digital audio data from the 1-bit data recorder 43 to the 1-bit digital data from the 1-bit ΣΔ modulator 48 and a 1-bit ΣΔ modulator 49 for modulating the sum output from the digital adder 44 into 1-bit digital data. The audio data recording device 40 further includes a recording processing circuit 50 for performing recording processing on the 1-bit digital data from the 1-bit ΣΔ modulator 49.

The analog audio signals from the sound source 41 are ΣΔ modulated by the 1-bit ΣΔ modulator 42 with a sampling frequency 64fs (= 44.1 kHz) which is 64 times as high as the sampling frequency fs for CD (= 44.1 kHz). The 1-bit digital audio data from the 1-bit ΣΔ modulator 42 is transiently stored in the 1 bit digital audio data so as to be supplied to the digital adder 44.

The sub-data generated by the sub-data 45 is encoded by the encoder 46 and subsequently analog FM modulated by the analog FM modulator 47 with a frequency equal to 16 times as high as sampling frequency fs for CD as the center frequency (carrier frequency). This analog FM modulated signal is ΣΔ modulated by the 1-bit ΣΔ modulator 48 with the sampling frequency 64fs before being supplied to the digital adder 44.

The digital adder 44 sums the 1-bit digital audio data from the 1-bit data recorder 43 to the 1-bit digital data from the 1-bit ΣΔ modulator 48. A sum output from the digital adder 44 (64 fs/2 bits) is modulated by the 1-bit ΣΔ modulator 49 into 1-bit digital data which is supplied to the recording processing circuit 50. The 1-bit digital data, recording-processed by the recording processing circuit 50, is recorded by a recording head 51 on the magnetic tape 10.

Wt the present audio data recording device 40, the 1-bit digital audio data, obtained on 1-bit ΣΔ modulation on the FM modulated signals, can be recorded in a band sufficiently removed from the band for the 1-bit digital audio data.

Thus, the present audio data recording device 40 can record the sub-signals, such as audio or video signals or the letter information, on the magnetic tape 10 without the necessity of increasing the recording capacity. If, for example, the surround speech for surround, not in need of the sound quality as high as that of the main audio data, is the sub-signal, surround reproduction becomes possible on the playback side without the necessity of increasing the capacity of the magnetic tape 10.

The signal processing device, recording apparatus and the reproducing apparatus according to the present invention are not limited to the above-described embodiments. For example, a transmission apparatus one-bit digital data may be used in place of the recording apparatus. In this case, the circuit structure up to the former half portion of the recording processing circuit may be changed without modifications. Similarly, a reception apparatus may be used in place of the reproducing apparatus.

It should be noted that the signal processing device according to the present invention may be used in common for the recording and transmission apparatus and for the reproducing and reception apparatus. Thus, the reproducing means, recording means and transmission means of the claims are not essential to the present invention.

## Claims

1. A reproducing apparatus (20) for reproducing a main signal having a first range and a sub-data signal having a pre-set frequency included in a second band sufficiently separated from said first band recorded on a recording medium as a ΣΔ modulated 1-bit digital signal, the apparatus comprising:
reproducing means (21, 22) for reproducing 1-bit digital signals from said recording medium;
first extraction means (23, 24) for extracting the main signal having the first range from the 1-bit digital signals reproduced by said reproducing means;
second extraction means (26, 27, 28) for extracting the sub-data signal included in the second range from the 1-bit digital signals reproduced by said reproducing means; and
output means (25, 29) for outputting the main signal extracted by said first extraction means and the sub-data signal extracted by said second extraction means.

2. A reproducing apparatus according to claim 1, wherein said main signal is audio information for a main channel and said sub-data information includes audio information for a sub-channel.

3. A reproducing apparatus according to claim 1 or 2, wherein said main signal is audio information and said sub-data information includes letter information pertinent to the audio information.

4. A reproducing apparatus according to any one of claims 1 to 3, wherein said main signal is audio information and said sub-data information includes video information pertinent to the audio information.

5. A recording apparatus (1, 40) for recording, as a ΣΔ modulated 1-bit digital signal, a main signal having a first range and a sub-data signal having a pre-set frequency included in a second band sufficiently separated from said first band, on a recording medium, comprising:
addition means (3, 44) for summing said main signal and said sub-data signal to each other;
ΣΔ modulation means (7, 49) for converting the result of addition by said addition means into a 1-bit digital signal; and
recording means (8, 9; 50, 51) for recording the 1-bit digital signal, as converted by said ΣΔ modulation means, on the recording medium.

6. A recording apparatus according to claim 5, further comprising:
second modulation means (42) for converting said main signal into a 1-bit digital signal; and
modulation means (48), as a source for generating said sub-data, for modulating said sub-data signal with a pre-set frequency included in a second band sufficiently separated from said first band.

7. A recording apparatus according to claim 5 or 6, wherein said main signal is audio information for a main channel and said sub-data information includes audio information for a sub-channel.

8. A recording apparatus according to any one of claims 5 to 7, wherein said main signal is audio information and said sub-data information includes letter information pertinent to the audio information.

9. A recording apparatus according to any one of claims 5 to 8, wherein said main signal is audio information and said sub-data information includes video information pertinent to the audio information.

10. A transmission apparatus comprising:
addition means (3, 44) for summing a main signal having a first range and a sub-data signal having a pre-set frequency included in a second band sufficiently separated from said first band;
ΣΔ modulation means (7, 49) for converting the result of addition by said addition means into a 1-bit digital signal; and
transmission means for transmitting the 1-bit digital signal, as converted by said ΣΔ modulation means.

11. A transmission apparatus according to claim 10, wherein said main signal is audio information and said sub-data information includes or is audio information.

12. A transmission apparatus according to claim 10 or 11, wherein said main signal is audio information and said sub-data information includes or is letter information pertinent to the audio information.

13. A transmission apparatus according to any one of claims 10 to 12, wherein said main signal is audio information and said sub-data information includes or is video information pertinent to the audio information.

14. A recording medium having recorded thereon a 1-bit digital signal comprising a main signal having a first band superimposed on a sub-data signal having a pre-set frequency included in a second band sufficiently separated from said first band and modulated by ΣΔ modulation.
